# EUROPÄISCHE PATENTSCHRIFT

(11) **EP 2 739 989 B1**
(45) Veröffentlichungstag und Bekanntmachung des Hinweises auf die Patenterteilung: **06.10.2021**
(21) Anmeldenummer: 12751014.7
(22) Anmeldetag: 31.07.2012
(51) Int. Cl.: G01S 13/75, G01S 13/82, G01S 13/87

(54) **VERFAHREN UND SYSTEM ZUR POSITIONSBESTIMMUNG VON RFID-TAGS**
METHOD AND SYSTEM FOR LOCATING RFID TAGS
PROCÉDÉ ET SYSTÈME DE LOCALISATION D'UNE ÉTIQUETTE RFID

(30) Priorität: 04.08.2011 AT 11282011
(43) Veröffentlichungstag der Anmeldung: 11.06.2014
(73) Patentinhaber: Technische Universität Wien, 1040 Wien (AT)
(72) Erfinder: ARTHABER, Holger, A-1060 Vienna (AT)
(74) Vertreter: Puchberger & Partner Patentanwälte
(86) Internationale Anmeldenummer: PCT/EP2012/064957
(87) Internationale Veröffentlichungsnummer: WO 2013/017596

(56) Entgegenhaltungen:
- EP-A2- 0 638 871
- WO-A1-2011/043091
- DE-A1-102009 008 174
- US-A1- 2006 007 036
- US-A1- 2008 143 482
- US-A1- 2008 165 058
- US-A1- 2010 156 651
- None

## Beschreibung

Die Erfindung bezieht sich auf ein Verfahren zur Ortung von Objekten, insbesondere RFID-Tags, sowie auf ein System zur Ortung von RFID-Tags mit zumindest einem RFID-Lesegerät.

RFID (radio-frequency identification)-Systeme sind aus dem Stand der Technik seit Jahrzehnten bekannt und werden zur Identifikation oder Lokalisierung von Objekten oder Lebewesen verwendet. Ein RFID-System besteht aus einem RFID-Tag, das sich am oder im zu identifizierenden oder lokalisierenden Objekt bzw. Lebewesen befindet und einen kennzeichnenden Code enthalten kann, sowie einem RFID-Lesegerät zum Auslesen dieser Information.

RFID-Tags können kleiner als ein Reiskorn sein und an Objekten aufgeklebt, in anderer Form angebracht oder in Lebewesen implantiert werden. Darüber hinaus besteht die Möglichkeit RFID-Tags über spezielle Druckverfahren herzustellen. Die Vorteile dieser Technik ergeben sich aus der Kombination der geringen Größe, der unauffälligen Auslesemöglichkeit und dem geringen Preis der RFID-Tags (teilweise im Cent-Bereich). Dadurch bietet sich diese Technik beispielsweise zur Ersetzung der noch weit verbreiteten Barcodes an.

Die Kopplung des RFID-Lesegeräts mit dem RFID-Tag geschieht durch vom RFID-Lesegerät erzeugte elektromagnetische Wechselfelder, deren Intensität und Frequenzbereich vom Anwendungsfall abhängig sind.

Durch diese Wechselfelder können Daten übertragen werden, sowie bei geringen Entfernungen die RFID-Tags mit elektrischer Energie versorgt werden. Wenn größere Reichweiten erzielt werden sollen und die Kosten der RFID-Tags nicht kritisch sind, können aktive RFID-Tags mit eigener Energieversorgung eingesetzt werden.

Das RFID-Lesegerät, erzeugt zur Abfrage ein hochfrequentes elektromagnetisches Wechselfeld, dem das RFID-Tag ausgesetzt wird. Die von ihm über die Antenne aufgenommene Hochfrequenzenergie kann während des Kommunikationsvorganges als Energieversorgung dienen. Bei aktiven Tags kann die Energieversorgung auch durch eine eingebaute Batterie erfolgen. Bei halb-aktiven Tags übernimmt die Batterie lediglich die Versorgung eines am RFID-Tag befindlichen Mikrochips.

Das RFID-Tag decodiert gegebenenfalls die vom Lesegerät gesendeten Befehle und codiert und moduliert seine Antwort in das eingestrahlte elektromagnetische Feld durch Änderung seiner Antennenimpedanz und Reflexion des vom Lesegerät ausgesendeten Feldes. Es handelt sich dabei im Allgemeinen nicht um einen aktiven Sendevorgang, sondern um ein moduliertes Zurückstreuen (back-scattering) des empfangenen Signals.

RFID-Tags arbeiten je nach Typ im Bereich der Langwelle bei 125-134 kHz, der Kurzwelle bei 13,56 MHz, der UHF bei 865-869 MHz (Europäische Frequenzen) bzw. 902 - 928 MHz (US-Amerikanische und Asiatische Frequenzbänder) oder der SHF bei 2,45 GHz und 5,8 GHz.

Hochfrequenz (HF) -Tags verwenden Lastmodulation, das heißt, sie verbrauchen durch Kurzschließen einen Teil der Energie des magnetischen Wechselfeldes. Dies kann das Lesegerät, theoretisch aber auch ein weiter entfernter Empfänger, detektieren. Die Antennen eines HF-Tags bilden eine Induktionsspule mit mehreren Windungen.

Ultrahochfrequenz (UHF) - Tags hingegen arbeiten im elektromagnetischen Fernfeld zum Empfang und zur Übermittlung der Antwort. Die Antennen sind meist lineare, gefaltete, zirkulare oder spiralige Dipole, der Chip sitzt meist in der Mitte zwischen den Dipolarmen des RFID-Tags.

Die Erkennung der Position von RFID-Tags ist eine wesentliche Voraussetzung für eine Vielzahl von Anwendungen im Bereich der Logistik, Warenverfolgung, Personenverfolgung, bei Mautverfahren, Zugangssystemen, zur Bestimmung der Berechtigung von Personen, zur Diebstahlerkennung, etc. Grundsätzlich ist es bekannt, durch Vergleich des vom RFID-Lesegerät gesendeten Signals mit dem vom RFID-Tag zurückgestreuten bzw. reflektierten Signal die Laufzeit des Signals und daraus die Distanz zwischen dem RFID-Lesegerät und dem RFID-Reader zu bestimmen. Der Vergleich kann dabei auf einem Vergleich der Feldstärke, der Leistung, oder der Phasenverschiebung beruhen. Derartige Verfahren sind jedoch sehr störanfällig, insbesondere aufgrund der Tatsache, dass Reflexionen stets auch von anderen Quellen, wie Hindernissen jeglicher Art, auftreten.

Um diese Probleme zu beheben kann eine kombinierte Winkel- und Entfernungsmessung erfolgen. Beispielsweise können auf einem Lesegerät mehrere Antennen (z.B. ein Antennenarray) angebracht werden, und daraus ein Winkelbereich des zurückgestreuten Signals bestimmt werden. Für eine Winkelbestimmung in einer Ebene sind dafür zumindest zwei Antennen nötig, während für eine Winkelbestimmung in zwei Ebenen zumindest 3 Antennen benötigt werden. Derartige Verfahren sind jedoch teuer und aufwändig. Weiters können mehrere räumlich versetzte RFID-Lesegeräte vorgesehen sein, wodurch eine Triangulation auf Basis der empfangenen Signalstärke ermöglicht wird, um die Quelle der Reflexionen exakter einzugrenzen. Dazu sind jedoch mehrere stationäre RFID-Lesegeräte erforderlich.

Aus dem Stand der Technik sind zahlreiche Verfahren zur Ortung von RFID-Tags bekannt. Beispielsweise zeigen die Druckschriften EP 0 638 871 A2, WO 2011/043091, US 2008/143482 A1, und US 2010/156651 A1 gattungsgemäße Verfahren zur Ortung von RFID-Tags. Weiterer Stand der Technik ist aus DE 10 2009 008174 A1 und US 2008/165058 A1, US 2006/007036 A1 bekannt.

Die technische Aufgabe der Erfindung besteht demnach unter anderem darin, ein Verfahren und/oder ein System zu schaffen, welches es ermöglicht, die Distanz zwischen einem RFID-Lesegerät und einem gezielt ausgewählten RFID-Tag in einfacher, robuster Weise zu bestimmen, wobei die Nachteile aus dem Stand der Technik behoben werden sollen und ein einfaches, billiges, zuverlässiges System zur Entfernungsmessung und/oder Positionsbestimmung realisiert werden kann. Es sollen nach Möglichkeit handelsübliche RFID-Tags verwendet werden können, und keinerlei Überschreitungen bestehender Funknormen auftreten.

Diese Aufgabe wird erfindungsgemäß durch ein Verfahren nach Anspruch 1 und ein System nach Anspruch 12 gelöst.

Dabei wird ein breitbandiges Signal mit geringer Leistung (um die Funkvorschriften zu erfüllen) dem vom RFID-Lesegerät während der Lesephase ausgesendeten Trägersignal überlagert. Während das RFID-Tag seine Daten zurücksendet, kann mittels Korrelation die Entfernung zwischen dem RFID-Lesegerät und dem RFID-Tag bestimmt werden. Dabei wird die Eigenschaft ausgenutzt, dass das RFID-Tag seine Antennen-Eingangsimpedanz während der Übertragung ändert, während alle anderen Reflektoren dies nicht tun - so kann gezielt die Entfernung zum aktiven RFID-Tag bestimmt werden.

Die Bestimmung der Laufzeit des Breitbandsignals kann durch Korrelation des (gegebenenfalls entsprechend dem empfangenen Codesignal im Vorzeichen angepasste) Breitbandsignals mit dem gestreuten Breitbandsignal, durch ein Matchingverfahren (z.B. Least-Squares-fit im Frequenzbereich) oder andere Verfahren erfolgen.

Mittels dieses Verfahrens kann die Entfernung zu einem Backscatter-Tag (egal ob aktiv oder passiv) bestimmt werden. Durch die direkte Messung der Entfernung kann eine Lokalisierung von einer einzelnen Antenne aus bzw. von einem Handgerät aus erfolgen. Auch können triangulierende Verfahren mit der Entfernungsmessung unterstützt werden und so deutlich bessere Ergebnisse gewonnen werden. Weiters können auch winkelabschätzende Verfahren mit mehreren Antennen um eine Distanzberechnung ergänzt werden.

Durch das spezielle Verfahren kann zwischen dem reflektierten Signal und störenden Reflexionen unterschieden werden. Weiters können Mehrfachausbreitungen erkannt und ausgeblendet werden. Dies reduziert Mehrdeutigkeiten in der Positionsbestimmung und führt zu einer deutlichen Verbesserung im Vergleich zu triangulierenden Verfahren.

Da es sich bei dem erfindungsgemäßen Verfahren um ein digitales, auf Abtastwerten (Samples) beruhendes Verfahren handelt, kann das Korrelationsmaximum immer nur auf ein Sample genau bestimmt werden. Um dies zu umgehen, können in bekannter Weise Verfahren wie Überabtastung (Oversampling) oder Sampleratenerhöhung (Upsampling) angewandt werden. Auch kann die Laufzeit über im Frequenzbereich basierende Methoden genauer errechnet werden, z.B. durch Division der Spektren des Sendesignals und des vorzeichenkorrigierten Empfangssignals. Speziell wenn sich bei Mehrwegeausbreitung zwei Pfadlängen nur wenig voneinander unterscheiden, kann jedoch selbst bei Überabtastung eine Auflösung der einzelnen Echos nur schlecht möglich sein. Da die Autokorrelationsfunktion einer Direct-Sequence Spread Spectrum Sequenz im besten Fall erst ein Sample neben dem Maximum Null wird, kann hier nicht zwischen den beiden Signalpfaden unterschieden werden.

Aus diesem Grund kann erfindungsgemäß vorgesehen sein, Subspace-Algorithmen zur Laufzeitschätzung zu verwenden. Derartige Algorithmen sind auf dem Gebiet der digitalen Signalverarbeitung bekannt und erlauben es, Signale, deren Laufzeit sich im Zeitbereich nur geringfügig unterscheidet, zu trennen, selbst wenn die Signale bei der Verwendung eines rein korrelativen Ansatzes nur als Einzelpfad erkannt werden würden. Typische Verfahren sind beispielsweise "Estimation of signal parameters via rotational invariance techniques (ESPRIT)" und "Multiple signal classification (MUSIC)", die Liste der anwendbaren Verfahren ist aber nahezu endlos. Ein konkretes Beispiel für ein Verfahren, dessen Verwendung erfindungsgemäß vorgesehen sein kann, findet sich in der Druckschrift "A high resolution time delay estimation technique in frequency domain for positioning system", Proc. IEEE Vehicular Technology Conference 2002, 2318.

Erfindungsgemäß kann weiters vorgesehen sein, derartige Subspace-Algorithmen neben der Laufzeitschätzung auch für die Winkelschätzung (bei Verwendung mehrere räumlich getrennter Antennen) einzusetzen. Auch hier hat sich gezeigt, dass die Anwendung der genannten Verfahren deutlich bessere Ergebnisse liefert als die Anwendung von Signalkorrelation alleine.Der Einsatz der Erfindung erfolgt im RFID-Lesegerät und erfordert keine neuen oder modifizierten RFID-Tags. Es können herkömmliche RFID-Tags, wie z.B. EPC Class 1 Gen 2 Tags (der meistverbreitete Standard) verwendet werden. Das Breitbandsignal kann als Direct-Sequence-Spread-Spectrum Signal, als OFDM-Signal oder als Chirp-Signal ausgeführt sein. Derartige Signale haben den Vorteil einer niedrigen spektralen Energiedichte, wodurch andere Signale nicht gestört werden, und bestehende Normen eingehalten werden können.

Das Codesignal ist erfindungsgemäß als mittelwertfreies digitales Signal ausgeführt. Die Dauer eines Teilbits des Codesignals kann ein ganzzahliges Vielfaches der Periodendauer des Breitbandsignals sein. Insbesondere kann die Dauer eines Teilbits etwa 1,3 Periodendauern des Breitbandsignals umfassen.

Durch die Mittelwertfreiheit des Codesignals wird ermöglicht, dass sich die von Störern reflektierten Breitbandsignale gegenseitig aufheben. Konkret kann beispielsweise eine FM0- oder Miller-Codierung verwendet werden, es sind aber auch andere Codierungen erfindungsgemäß vorgesehen.

Das gestreute Breitbandsignal wird erfindungsgemäß mit dem jeweiligen Vorzeichen des Codesignals multipliziert und über mehrere Perioden aufsummiert. Die erfindungsgemäße Multiplikation des empfangenen Breitbandsignals mit dem jeweiligen Vorzeichen des Codesignals ermöglicht die Detektion des an der Kommunikation beteiligten Tags. Bei Verwendung eines mittelwertfreien Codesignals heben sich Störsignale bei dieser Summierung gegenseitig auf. Es kann aber auch ein nicht ganzmittelwertfreies Codesignal verwendet werden. Solange man genügend Nullen und Einsen hat, kann man auch mit nicht perfekt mittelwertfreien Signalen und intelligenter Summation arbeiten.

Ebenso ist erfindungsgemäß vorgesehen, dass die Summation nur über eine Periode erfolgt. Beispielsweise kann ein Tag lange Zeit "1" und dann lange Zeit "0" zurücksenden - also nur eine Periode. Gleichfalls ist erfindungsgemäß vorgesehen, dass vom Tag eine "0101010101..." Folge oder ähnliches zur Entfernungsmessung angefordert werden kann. Dann würde die Entfernungsmessung nicht mit einem Datensignal, sondern mit einem dedizierten Hilfssignal durchgeführt werden.

Die Entfernung zwischen den RFID-Lesegeräten und dem RFID-Tag kann durch ein erfindungsgemäßes Verfahren bestimmt und aus den bekannten Positionen zumindest eines der RFID-Lesegeräte die Position des RFID-Tags berechnet werden.

Die Datenübertragung zwischen dem RFID-Lesegerät und dem RFID-Tag kann durch modulierte Rückstreuung erfolgen. Erfindungsgemäß ist auch vorgesehen, dass das RFID-Tag als semi-aktives Tag ausgeführt ist, welches beispielsweise aktive Reflektoren (RX-Antenne + Modulator + Verstärker + TX-Antenne) verwendet, wie es im österreichischen LKW-Mautsystem vorgeschrieben ist.

Das Trägersignal kann als Hochfrequenzträgersignal ausgeführt sein. Es kann eine Frequenz von 850 MHz bis 950 MHz aufweisen. Bei dem RFID-Tag kann es sich um ein passives RFID-Tag nach EPC Class1 Gen2 handelt.

Das RFID-Lesegerät kann zur Ortung des RFID-Tags zusätzlich eine Winkelschätzung vornehmen. Dazu kann vorgesehen sein, dass am RFID-Lesegerät mehrere Antennen oder ein Antennenarray vorgesehen sind.

Das RFID-Tag kann erfindungsgemäß die Modulation des Abfragesignals mit einem Codesignal entweder durch Variation seiner Antennenimpedanz oder in Form einer aktiven Modulation durchführen.

Das System kann weiters eine mit den RFID-Lesegeräten verbundene oder verbindbare Datenverarbeitungseinheit und eine Datenbank umfassen, wobei die Positionen der RFID-Lesegeräte in der Datenbank gespeichert sind und die Datenverarbeitungseinheit zur Berechnung der Position der RFID-Tags aus den Positionen der RFID-Lesegeräte und den Distanzen zwischen den RFID-Lesegeräten und den RFID-Tags eingerichtet ist.

Am RFID-Lesegerät können mehrere Antennen zur Winkelschätzung in einer oder zwei Ebenen vorgesehen sein.

Bei Verwendung eines Spread-Spectrum-Signals als Breitbandsignal kann die Periodendauer der verwendeten Spread-Spectrum-Sequenz erfindungsgemäß so gewählt werden, dass unabhängig von der Datenrate des zurückgestreuten Signals (kann um ca +/-20% variieren) immer zumindest eine volle Periode der Spread-Spectrum-Sequenz in ein Teilbit des verwendeten Codesignals hineinpasst. Für das Aufsummieren der zurückgestreuten Signale kann in diesem Fall genau eine Periode aus der Datensignal-Teitbit-Mitte entnommen. Da im Vorhinein nicht bekannt ist, wie schnell genau das Tag zurückscattert, starten diese Spread-Spectrum -Perioden immer an einer anderen Position. Bei der Summation wird der Signalausschnitt daher zunächst zyklisch rotiert (man weiß ja anhand der Position wie er liegen sollte), sodass bei der Summation immer ,gleiche'Spread-Spectrum -Perioden aufaddiert werden.

Das RFID-Tag kann als passives, aktives oder semi-aktives RFID-Tag ausgeführt sein und eingerichtet sein, das Abfragesignal durch Variation seiner Antennenimpedanz oder durch aktive Modulation mit einem Codesignal moduliert als Reflexionssignal zu reflektieren,

Weitere erfindungsgemäße Merkmale ergeben sich aus den Ansprüchen, der Beschreibung und den Zeichnungen.

In der Zeichnung ist der Erfindungsgegenstand in Ausführungsbeispielen schematisch dargestellt. Es zeigen
- Fig. 1:: eine schematische Darstellung einer Ausführungsform der Erfindung;
- Fig. 2:: eine schematische Darstellung der Signalverläufe bei einem erfindungsgemäßen Verfahren;
- Fig. 3:: eine schematische Darstellung des Details III aus Fig. 2;
- Fig. 4:: eine schematische Darstellung des Details IV aus Fig. 3;
- Fig. 5a - 5b:: eine schematische Darstellung einer Ausführungsform der erfindungsgemäßen Summenbildung eines ausgewählten RFID-Tags und eines Störers;
- Fig. 6a - 6b:: weitere schematische Darstellung erfindungsgemäßer Ausführungsformen.

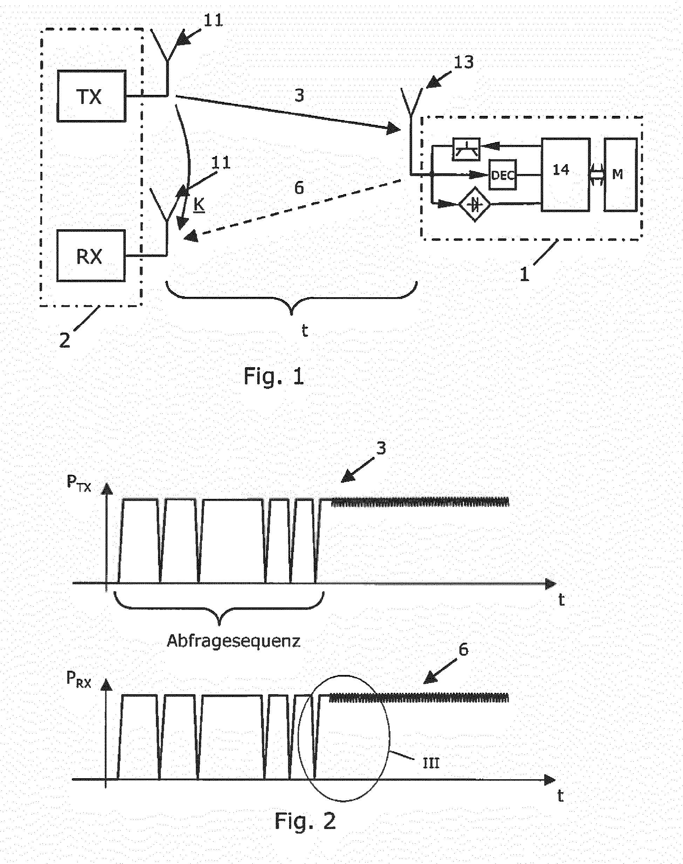

Fig. 1 zeigt eine Ausführungsform eines erfindungsgemäßen Systems zur Ortung eines RFID-Tags 1 mit einem RFID-Lesegerät 2. Das RFID-Tag 1 umfasst eine Antenne 13, eine Logik 14 sowie Vorrichtungen zur Energieversorgung (Gleichrichter), zur Decodierung des empfangenen Signals und zur Modulation der Antennenimpedanz. Optional kann die Logik mit einem Speicher verbunden sein, wie in diesem Ausführungsbeispiel gezeigt ist.

Das RFID-Lesegerät 2 verfügt über einen Sendeteil TX und einen Empfangsteil RX, die jeweils mit einer Antenne 11 ausgestattet sind. Alternativ kann auch vorgesehen sein, dass das RFID-Lesegerät 2 keine getrennten Antennen, sondern eine gemeinsame Antenne und einen Zirkulator, Richtkoppler oder dergleichen zur Auftrennung der Sende- und Empfangsrichtung aufweist.

Das RFID-Lesegerät 2 sendet zunächst ein Abfragesignal 3 aus, welches vom RFID-Tag 1 empfangen, mit einem Datensignal moduliert und als Reflexionssignal 6 zurückgestreut wird.

Gleichzeitig wird das Abfragesignal 3 von anderen Störern im Sendebereich reflektiert, wodurch der Empfang am RFID-Lesegerät 2 beeinträchtigt wird. Darüber hinaus wird der Empfang am Empfangsteil RX des RFID-Lesegeräts 2 auch durch die Kopplung K mit dem Sendeteil TX stark überlagert.

Fig. 2 zeigt eine schematische Darstellung der Signalverläufe bei einem erfindungsgemäßen Verfahren. Die gesendete Leistung P_{TX} des vom RFID-Lesegerät 2 gesendeten Abfragesignals 3 zeigt zunächst eine Abfragesequenz in Form einer Folge von Signalpaketen, die zur Initialisierung und zur Energieversorgung des RFID-Tags 1 dienen.

Das Abfragesignal 3 setzt sich aus einem schmalbandigen Hochfrequenzträgersignal und einem überlagerten ersten Breitbandsignal 4 zusammen, wobei das Hochfrequenzträgersignal eine Frequenz von etwa 865 MHz aufweist. Das Breitbandsignal 4 ist als Direct-Sequence Spread-Spectrum Signal ausgeführt, wobei die konkrete Wahl des Spreizcodes vorerst irrelevant ist.

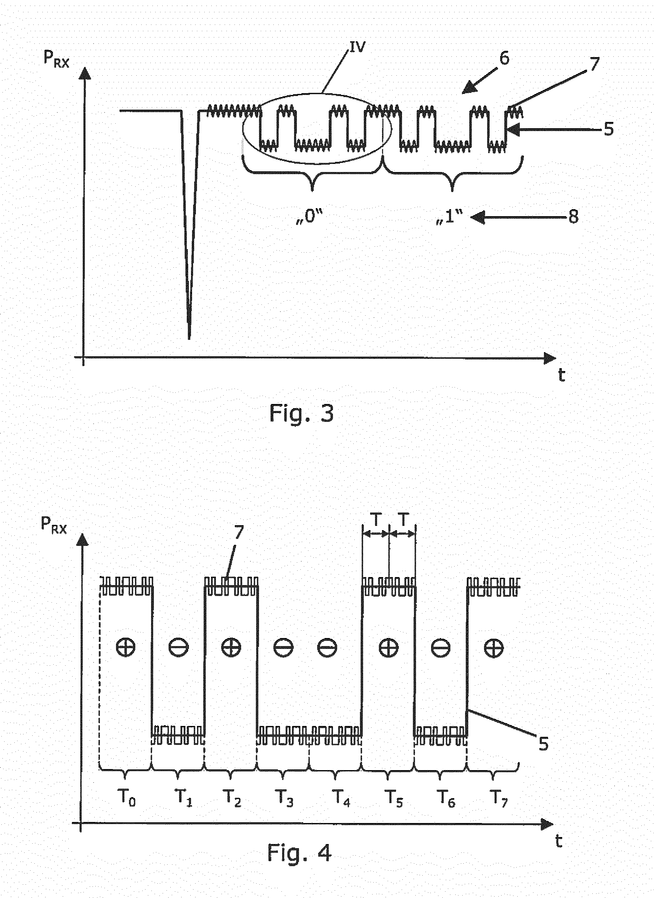

Das dem Trägersignal aufmodulierte Breitbandsignal 4 ist in Fig. 2 schematisch als hochfrequente Schwingung angedeutet. Die vom Empfangsteil des RFID-Readers 2 empfangene Leistung ist als P_{RX} schematisch gezeigt. Hier wiederholt sich die Abfragesequenz, gefolgt von dem eigentlichen Reflexionssignal 6. Das vom Empfangsteil RX empfangene Signal besteht in erster Linie aus dem durch den direkten Pfad K übergekoppelten Signal, sowie aus zahlreichen Störsignalen und dem gesuchten Signal des RFID-Tags. Der in Fig. 2 gezeigte Detailbereich III wird in Fig. 3 näher gezeigt.

Fig. 3 zeigt eine schematische Darstellung des Details III der P_{RX} aus Fig. 2. Dabei ist zu beachten, dass es sich um eine vereinfachte Darstellung eines Vorganges handelt, der eigentlich nur in der komplexen Ebene skizzierbar ist, und nur zum grundsätzlichen Verständnis des Verfahrens dient.

Das Reflexionssignal 6 wird vom RFID-Tag 1 durch Variation seiner Antennenimpedanz mit einem Datensignal 8 erzeugt. Mit dem Datensignal 8 überträgt das RFID-Tag 1 beispielsweise seine eigene unveränderliche Seriennummer, Daten des gekennzeichneten Objekts oder andere Information.

Das Datensignal 8 selbst wird nicht direkt zur Modulation verwendet, sondern in Form eines mittelwertfreien Codesignals 5 übertragen. Beispielsweise erfolgt in Fig. 3 die Übertragung der Bitfolge "0 1" durch das gezeigte mittelwertfreie Codesignal 5. Diesem Codesignal 5 ist eine gestreutes Breitbandsignal 7 überlagert, welches aufgrund der endlichen Laufzeit zwischen dem RFID-Lesegerät 2 und dem RFID-Tag 1 zeitlich nicht identisch mit dem gesendeten Breitbandsignal 4 ist. Die gezeigten Größenverhältnisse sind rein exemplarisch und beschränken die Erfindung in keiner Weise. Beispielsweise ist es möglich, dass das Breitbandsignal 4 bzw. das gestreute Breitbandsignal 7 eine höhere Amplitude hat, als das Codesignal 5. Das Detail IV wird in Fig. 4 näher erläutert.

Fig. 4 zeigt eine schematische Darstellung des Details IV aus Fig. 3. Gezeigt ist eine volle Periode des Codesignals 5. Im vorliegenden Fall wurde für das Codesignal 5 eine Miller-Sequenz mit M=4 verwendet, es sind aber auch andere mittelwertfreie Codierungen des Datensignals vorgesehen. Das beispielhafte Codesignal 5 umfasst die 8 Zeitabschnitte bzw. Teilbits T₀ bis T₇. Das gestreute Breitbandsignal 7 ist dem Codesignal 5 überlagert und weist die Periodendauer T auf. Im vorliegenden Fall sind die Periodendauer T und die Dauer eines Miller-Zeitabschnittes (Teilbits) T_{I} so gewählt, dass etwa zwei Perioden des Breitbandsignals 4 bzw. 7 in einen Zeitabschnitt (ein Teilbit) T_{I} passen. Dies hat den Vorteil, dass bei der folgenden Demodulation das gestreute Breitbandsignal 7 robuster rekonstruiert werden kann. Dabei ist jedoch zu beachten, dass mehr Perioden nicht notwendigerweise zu einer robusteren Rekonstruierung führen müssen, da nämlich dann die Bandbreite steigt und mehrere bandbegrenzende Elemente an der Kommunikation beteiligt sind (Antennen).

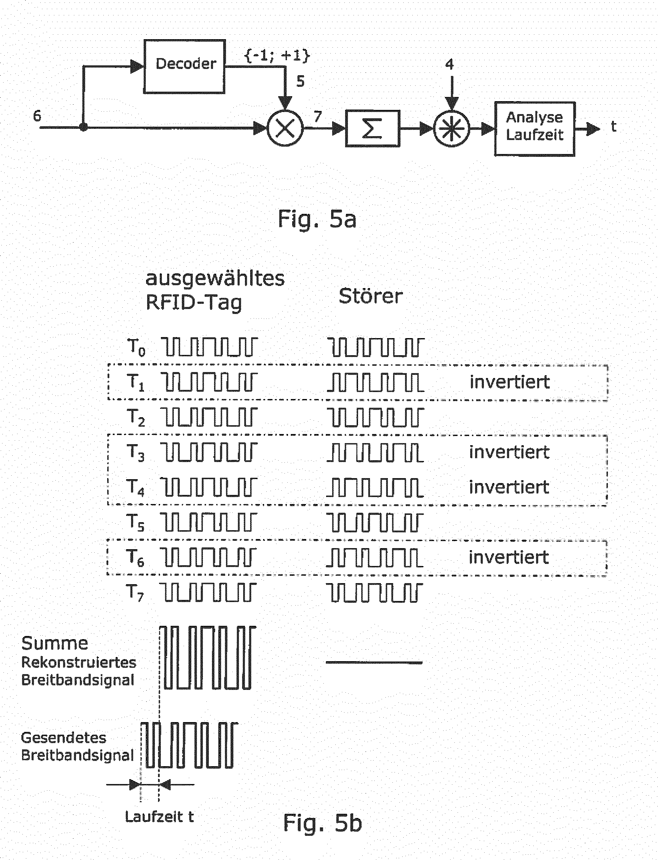

Fig. 5a zeigt eine schematische Darstellung der Abläufe im RFID-Reader 2 zur Berechnung der Laufzeit t des Breitbandsignals 4. Es wird vom empfangenen Reflexionssignal 6 ausgegangen. Dieses durchläuft einen Decoder, der das Vorzeichen des Codesignals 5 feststellt. Am Ausgang des Decoders können die Werte +1 oder-1 vorliegen. Es handelt sich dabei nicht um das Datensignal 8, sondern lediglich um das Codesignal 5. Der Wert am Ausgang des Decoders wird mit dem Reflexionssignal 6 multipliziert und danach erfolgt eine Summenbildung.

Dieses Verfahren ist beispielhaft in Fig. 5b dargestellt. Für das ausgewählte RFID-Tag detektiert der Decoder zu den Zeitabschnitten T₁, T₃, T₄ und T₆ (siehe Fig. 4) ein negatives Vorzeichen, und multipliziert das Reflexionssignal 6 mit -1.

Dadurch wird die Modulation im RFID-Tag rückgängig gemacht, und es liegt in jedem Zeitabschnitt das gleiche Breitbandsignal vor. Im Gegensatz dazu heben sich Signale von Störern, die ja nicht mit dem Codesignal 5 moduliert wurden, gegenseitig auf. Dies zeigt die Notwendigkeit der Verwendung eines mittelwertfreien oder fast mittelwertfreien Signals auf. Je näher der Mittelwert des Codesignals 5 bei Null liegt, umso exakter erfolgt die nachfolgende Detektion des Breitbandsignals 7. Darüber hinaus beeinflusst auch die Anzahl der Summenbildungen die Genauigkeit des Verfahrens: je mehr Perioden aufaddiert werden, umso genauer wird das Breitbandsignal 7 rekonstruiert. Dazu kann vorgesehen sein, dass das RFID-Lesegerät vor der eigentlichen Abfrage eine mehrstellige Zufallszahl anfordert, um daraus das Breitbandsignal deutlich rekonstruieren zu können. Selbstverständlich kann jegliche Antwort des Tags, vor allem die eigentlichen Nutzdaten, zu diesem Zweck genutzt werden.

Aus der Kenntnis des gestreuten Breitbandsignals 7 und des gesendeten Breitbandsignals 4 kann das RFID-Lesegerät 2 durch Korrelation in bekannter Weise die Phasenverschiebung bzw. die Laufzeit des Breitbandsignals 4 bestimmen, und daraus die gewünschte Zeitdauer t berechnen. Dies ist ebenfalls schematisch in Fig. 5b gezeigt.

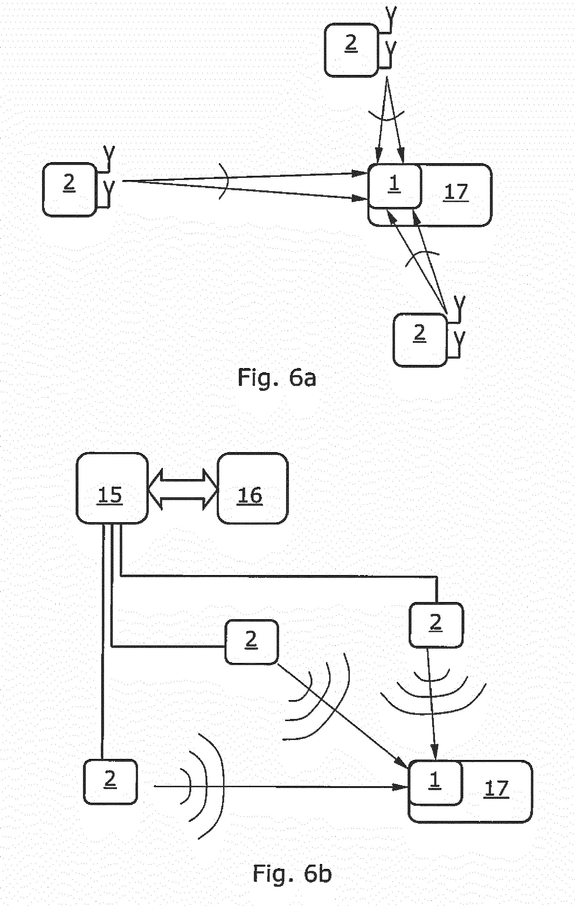

Schließlich zeigen Figs. 6a - 6b weitere Ausführungsformen des erfindungsgemäßen Systems. In der Ausführungsform nach Fig. 6a ist das RFID-Tag 1 an einem zu lokalisierenden Objekt 17 befestigt. Es sind drei RFID-Lesegeräte 2 vorgesehen, deren Positionen bekannt sind. Durch Ausführung des erfindungsgemäßen Verfahrens kann jedes RFID-Lesegerät 2 die Distanz zum RFID-Tag 2 bestimmen. Darüber hinaus kann vorgesehen sein, dass die RFID-Lesegeräte 2 über mehrere Antennen verfügen, um eine Winkelschätzung durchzuführen. Aus der Kenntnis von Winkel und Distanz kann eine verbesserte Ortung ermöglicht werden.

Ebenso kann in einem Ausführungsbeispiel nach Fig. 6b vorgesehen sein, dass die RFID-Lesegeräte 2 mit einer zentralen Datenverarbeitungseinheit 15 verbunden sind, die ihrerseits mit einer Datenbank 16 verbunden ist, welche die Positionsdaten der RFID-Lesegeräte 2 beinhaltet. Aus den Positionsdaten und den durch die RFID-Lesegeräte 2 gerechneten Distanzen berechnet die zentrale Datenverarbeitungseinheit 15 die Position des RFID-Tags 1 und des damit verbundenen Objekts 17.

Die Erfindung beschränkt sich nicht auf die dargestellten Ausführungsbeispiele, sondern umfasst selbstverständlich auch andere Ausführungsformen. Insbesondere beschränkt sich die Erfindung nicht auf die Verwendung passiver UHF-RFID-Tags, sondern umfasst auch aktive RFID-Tags, semi-aktive RFID-Tags und/oder in anderen Frequenzbereichen arbeitende RFID-Tags, wobei die Kommunikation mit modulierter Rückstreuung oder anderen Verfahren erfolgen kann.

### Bezugszeichenliste

- 1: RFID-Tag
- 2: RFID-Lesegerät
- 3: Abfragesignal
- 4: Breitbandsignal
- 5: Codesignal
- 6: Reflexionssignal
- 7: Gestreutes Breitbandsignal
- 8: Datensignal
- 9: Datenverarbeitungseinheit
- 10: Speicher
- 11: Antenne
- 12: Transceiver
- 13: Antenne
- 14: Logik
- 15: Datenverarbeitungseinheit
- 16: Datenbank
- 17: Objekt

## Patentansprüche

1. Verfahren zur Positionsbestimmung eines RFID-Tags (1), wobei die Position eines oder mehrerer RFID-Lesegeräte (2) bekannt ist und die Entfernung zwischen den RFID-Lesegeräten (2) und dem RFID-Tag (1) bestimmt wird, und wobei aus den bekannten Positionen zumindest eines der RFID-Lesegeräte (2) die Position des RFID-Tags (1) berechnet wird, wobei zur Bestimmung der Entfernung zwischen den RFID-Lesegeräten (2) und dem RFID-Tag (1)
a. das RFID-Lesegerät (2) ein Abfragesignal (3) aussendet, welches ein Trägersignal und ein überlagertes Breitbandsignal (4) umfasst;
b. das RFID-Tag (1) das Abfragesignal (3) empfängt, mit einem Codesignal (5) moduliert und als Reflexionssignal (6) reflektiert;
c. das RFID-Lesegerät (2) das Reflexionssignal (6) empfängt und daraus durch einen Decoder das Vorzeichen des Codesignals (5) und ein gestreutes Breitbandsignal (7) gewinnt;
d. das RFID-Lesegerät (2) durch Vergleich des gesendeten Breitbandsignals (4) mit dem gestreuten Breitbandsignal (7) eine Phasenverschiebung oder Laufzeit des Breitbandsignal (4) bestimmt;
e. das RFID-Lesegerät (2) aus der Laufzeit die Distanz zwischen dem RFID-Lesegerät (2) und dem RFID-Tag (1) bestimmt,
**dadurch gekennzeichnet, dass** in Schritt c) das RFID-Lesegerät (2) zur möglichst genauen Bestimmung des gestreuten Breitbandsignals (7) das empfangene Reflexionssignal (6) mit dem Vorzeichen des Codesignals (5) im jeweiligen Zeitabschnitt multipliziert und derart über eine oder mehrere Perioden des Codesignals (5) aufsummiert, dass sich Störsignale gegenseitig aufheben.

2. Verfahren nach Anspruch 1, **dadurch gekennzeichnet, dass** das Breitbandsignal (4) als Direct-Sequence-Spread-Spectrum Signal, als OFDM-Signal oder als Chirp-Signal ausgeführt ist.

3. Verfahren nach Anspruch 1 oder 2, **dadurch gekennzeichnet, dass** der Vergleich in Schritt d) als Korrelation oder in Form eines Matching-Verfahrens durchgeführt wird.

4. Verfahren nach einem der Ansprüche 1 bis 3, **dadurch gekennzeichnet, dass** das Codesignal (5) als mittelwertfreies digitales Signal ausgeführt ist.

5. Verfahren nach Anspruch 4, **dadurch gekennzeichnet, dass** die Dauer eines Teilbits des Codesignals (5) ein ganzzahliges Vielfaches der Periodendauer des Breitbandsignals (4) ist.

6. Verfahren nach einem der Ansprüche 1 bis 5, **dadurch gekennzeichnet, dass** das Codesignal (5) ein beliebiges Datensignal (8) codiert, wobei FM0-Sequenzen, Miller-Sequenzen oder eine andere Codierung verwendet wird.

7. Verfahren nach einem der Ansprüche 1 bis 6, **dadurch gekennzeichnet, dass** die Datenübertragung zwischen dem RFID-Lesegerät (2) und dem RFID-Tag (1) durch modulierte Rückstreuung oder dedizierte Modulatoren erfolgt.

8. Verfahren nach einem der Ansprüche 1 bis 7, **dadurch gekennzeichnet, dass** das RFID-Lesegerät (2) zur Ortung des RFID-Tags (1) zusätzlich eine Winkelschätzung vornimmt.

9. Verfahren nach einem der Ansprüche 1 bis 8, **dadurch gekennzeichnet, dass** zur Verbesserung der Laufzeitbestimmung und/oder zur Winkelschätzung am RFID-Lesegerät (1) im Schritt d) Subspace-Algorithmen, insbesondere ESPRIT und/oder MUSIC, eingesetzt werden.

10. Verfahren nach einem der Ansprüche 1 bis 9, **dadurch gekennzeichnet, dass** das RFID-Tag in Schritt b) die Modulation entweder durch Variation seiner Antennenimpedanz oder in Form einer aktiven Modulation durchführt.

11. Verfahren nach einem der Ansprüche 1 bis 10, **dadurch gekennzeichnet, dass** vom RFID-Tag ein dediziertes Hilfssignal zur Entfernungsmessung ausgesendet wird.

12. System zur Positionsbestimmung eines RFID-Tags (1) mit zumindest einem RFID-Lesegerät (2), dessen Position bekannt ist, wobei das RFID-Lesegerät (1) eine Datenverarbeitungseinheit (9) und zumindest eine Antenne (11), und das RFID-Tag (1) zumindest eine Antenne (13) und eine Logik (14) umfasst, wobei das RFID-Tag (1) eingerichtet ist, ein Abfragesignal (3) zu empfangen und mit einem Codesignal (5) moduliert als Reflexionssignal (6) zu reflektieren,
das RFID-Lesegerät (2) eingerichtet ist, ein Abfragesignal (3) auszusenden, welches ein Trägersignal und ein überlagertes Breitbandsignal (4) umfasst, und aus dem Reflexionssignal (6) durch einen Decoder das Vorzeichen des Codesignals (5) und ein
gestreutes Breitbandsignal (7) zu gewinnen,
die Datenverarbeitungseinheit (9) eingerichtet ist, durch Vergleich des gesendeten Breitbandsignals (4) mit dem gestreuten Breitbandsignal (7) eine Phasenverschiebung oder eine Laufzeit des Breitbandsignals (4) zu bestimmen, und daraus die Distanz zwischen dem RFID-Lesegerät (2) und dem RFID-Tag (1) zu berechnen,
**dadurch gekennzeichnet, dass**
das RFID-Lesegerät (2) dazu eingerichtet ist, zur möglichst genauen Bestimmung des gestreuten Breitbandsignals (7) das empfangene Reflexionssignal (6) mit dem Vorzeichen des Codesignals (5) im jeweiligen Zeitabschnitt zu multiplizieren und über eine oder mehrere Perioden des Codesignals (5) derart aufzusummieren, dass sich Störsignale gegenseitig aufheben.

13. System nach Anspruch 12, **dadurch gekennzeichnet, dass** das System weiters eine mit den RFID-Lesegeräten (1) verbundene oder verbindbare Datenverarbeitungseinheit (15) und eine Datenbank (16) umfasst, wobei die Positionen der RFID-Lesegeräte (1) in der Datenbank gespeichert sind und die Datenverarbeitungseinheit (15) zur Berechnung der Position der RFID-Tags (1) aus den Positionen der RFID-Lesegeräte (2) und den Distanzen zwischen den RFID-Lesegeräten (2) und den RFID-Tags (1) eingerichtet ist.

14. System nach Anspruch 12 oder 13, **dadurch gekennzeichnet, dass** am RFID-Lesegerät mehrere Antennen zur Winkelschätzung in einer oder zwei Ebenen vorgesehen sind.

## Claims

1. A method for determining the position of an RFID tag (1), wherein the position of one or more RFID readers (2) is known and the distance between the RFID readers (2) and the RFID tag (1) is determined, and wherein the position of the RFID tag (1) is calculated on the basis of the known positions of at least one of the RFID readers (2), wherein, for determining the distance between the RFID readers (2) and the RFID tag (1),
a. the RFID reader (2) emits an interrogating signal (3), which comprises a carrier signal and a superimposed broadband signal (4);
b. the RFID tag (1) receives the interrogating signal (3), modulates it with a code signal (5) and reflects it as a reflection signal (6);
c. the RFID reader (2) receives the reflection signal (6) and, by means of a decoder, obtains from it the sign of the code signal (5) and a scattered broadband signal (7);
d. the RFID reader (2) determines a phase shift or delay time of the broadband signal (4) by comparing the sent broadband signal (4) to the scattered broadband signal (7);
e. the RFID reader (2) determines the distance between the RFID reader (2) and the RFID tag (1) on the basis of the delay time,
**characterized in that,** in step c), for determining the scattered broadband signal (7) as exactly as possible, the RFID reader (2) multiplies the received reflection signal (6) by the sign of the code signal (5) in the respective time interval and adds it up over one or more periods of the code signal (5) in such a way that interference signals cancel each other out.

2. The method according to claim 1, **characterized in that** the broadband signal (4) is configured as a direct-sequence spread spectrum signal, as an OFDM signal or as a chirp signal.

3. The method according to claim 1 or 2, **characterized in that** the comparison in step d) takes place as a correlation or in the form of a matching method.

4. The method according to one of claims 1 to 3, **characterized in that** the code signal (5) is configured as a digital signal free of mean values.

5. The method according to claim 4, **characterized in that** the duration of a partial bit of the code signal (5) is an integral multiple of the period duration of the broadband signal (4).

6. The method according to one of claims 1 to 5, **characterized in that** the code signal (5) encodes any data signal (8), wherein FM0 sequences, Miller sequences or another coding are used.

7. The method according to one of claims 1 to 6, **characterized in that** the data transmission between the RFID reader (2) and the RFID tag (1) takes place via modulated backscattering or dedicated modulators.

8. The method according to one of claims 1 to 7, **characterized in that** the RFID reader (2) additionally performs an angle estimation for locating the RFID tag (1).

9. The method according to one of claims 1 to 8, **characterized in that**, in step d), subspace algorithms, in particular ESPRIT and/or MUSIC, are used for improving the delay time determination and/or for the angle estimation on the RFID reader (1).

10. The method according to one of claims 1 to 9, **characterized in that**, in step b), the RFID tag performs the modulation either by varying its antenna impedance or in the form of an active modulation.

11. The method according to one of claims 1 to 10, **characterized in that** a dedicated auxiliary signal is emitted by the RFID tag for measuring the distance.

12. A system for determining the position of an RFID tag (1) with at least one RFID reader (2), whose position is known, wherein the RFID reader (1) comprises a data processing unit (9) and at least one antenna (11), and wherein the RFID tag (1) comprises at least one antenna (13) and a logic (14), wherein the RFID tag (1) is configured to receive an interrogating signal (3) and, modulated with a code signal (5), reflect it as a reflection signal (6), and wherein the RFID reader (2) is configured to emit an interrogating signal (3), which comprises a carrier signal and a superimposed broadband signal (4), and, by means of a decoder, to obtain from the reflection signal (6) the sign of the code signal (5) and a scattered broadband signal (7), and wherein the data processing unit (9) is configured to determine a phase shift or delay time of the broadband signal (4) by comparing the sent broadband signal (4) to the scattered broadband signal (7) and to calculate the distance between the RFID reader (2) and the RFID tag (1) on the basis of thereof,
**characterized in that**
for determining the scattered broadband signal (7) as exactly as possible, the RFID reader (2) is configured to multiply the received reflection signal (6) by the sign of the code signal (5) in the respective time interval and to add it up over one or more periods of the code signal (5) in such a way that interference signals cancel each other out.

13. The system according to claim 12, **characterized in that** the system further comprises a data processing unit (15), which is or can be connected to the RFID readers (1), and a database (16), wherein the positions of the RFID readers (1) are stored in the database and wherein the data processing unit (15) is configured to calculate the position of the RFID tags (1) from the positions of the RFID readers (2) and the distances between the RFID readers (2) and the RFID tags (1).

14. The system according to claim 12 or 13, **characterized in that** multiple antennas are provided on the RFID reader for an angle estimation in one or two planes.

## Revendications

1. Un procédé de localisation d'une étiquette RFID (1), dans lequel la position d'un ou de plusieurs lecteurs RFID (2) est connue et la distance entre les lecteurs RFID (2) et l'étiquette RFID (1) est déterminée, et dans lequel la position de l'étiquette RFID (1) est calculée à partir des positions connues d'au moins un des lecteurs RFID (2), dans lequel, pour déterminer la distance entre les lecteurs RFID (2) et l'étiquette RFID (1),
a. le lecteur RFID (2) envoie un signal d'interrogation (3) comprenant un signal porteur et un signal à large spectre (4) superposé;
b. l'étiquette RFID (1) reçoit le signal d'interrogation (3), le module avec un signal codé (5) et le reflète comme un signal de réflexion (6);
c. le lecteur RFID (2) reçoit le signal de réflexion (6) et en récupère, par un décodeur, le signe du signal codé (5) et un signal à large spectre diffusé (7) ;
d. le lecteur RFID (2) détermine un décalage de phase ou un temps de transit du signal à large spectre (4) par comparaison du signal à large spectre (4) envoyé avec le signal à large spectre diffusé (7) ;
e. le lecteur RFID (2) détermine la distance entre le lecteur RFID (2) et l'étiquette RFID (1) à partir du temps de transit,
**caractérisé en ce que,** dans l'étape c), afin de déterminer le signal à large spectre diffusé (7) aussi précisément que possible, le lecteur RFID (2), multiplie le signal de réflexion (6) reçu par le signe du signal codé (5) dans la période respective et l'additionne sur une ou plusieurs périodes du signal codé (5) de telle sorte que les signaux d'interférence s'annulent.

2. Le procédé selon la revendication 1, **caractérisé en ce que** le signal à large spectre (4) est configuré comme un signal à étalement de spectre à séquence directe, comme un signal OFDM ou comme un signal chirp.

3. Le procédé selon la revendication 1 ou 2, **caractérisé en ce que** la comparaison dans l'étape d) est effectuée comme une corrélation ou sous forme d'une méthode d'appariement.

4. Le procédé selon l'une des revendications 1 à 3, **caractérisé en ce que** le signal codé (5) est configuré comme un signal digital sans valeur moyenne.

5. Le procédé selon la revendication 4, **caractérisé en ce que** la durée d'un bit partiel du signal codé (5) est un multiple entier de la durée de période du signal à large spectre (4).

6. Le procédé selon l'une des revendications 1 à 5, **caractérisé en ce que** le signal codé (5) code un signal de données (8) quelconque, dans lequel des séquences FM0, des séquences Miller ou un autre codage sont utilisés.

7. Le procédé selon l'une des revendications 1 à 6, **caractérisé en ce que** la transmission des données entre le lecteur RFID (2) et l'étiquette RFID (1) s'effectue par rétrodiffusion modulée ou des modulateurs dédiés.

8. Le procédé selon l'une des revendications 1 à 7, **caractérisé en ce que** le lecteur RFID (2) effectue en outre une estimation d'angle pour localiser l'étiquette RFID (1).

9. Le procédé selon l'une des revendications 1 à 8, **caractérisé en ce que** des algorithmes de sous-espace, en particulier ESPRIT et/ou MUSIC, sont utilisés dans l'étape d) pour améliorer la détermination du temps de transit et/ou pour l'estimation d'angle au niveau du lecteur RFID (1).

10. Le procédé selon l'une des revendications 1 à 9, **caractérisé en ce que** l'étiquette RFID effectue la modulation dans l'étape b) soit par variation de son impédance d'antenne soit sous forme d'une modulation active.

11. Le procédé selon l'une des revendications 1 à 10, **caractérisé en ce qu'**un signal auxiliaire dédié est envoyé par l'étiquette RFID pour la mesure de la distance.

12. Un système de localisation d'une étiquette RFID (1) avec au moins un lecteur RFID (2) dont la position est connue, dans lequel le lecteur RFID (1) comprend une unité de traitement des données (9) et au moins une antenne (11) et l'étiquette RFID (1) comprend au moins une antenne (13) et une logique (14), dans lequel l'étiquette RFID (1) est configurée pour recevoir un signal d'interrogation (3) et le refléter, modulé avec un signal codé (5), comme un signal de réflexion (6), dans lequel le lecteur RFID (2) est configuré pour envoyer un signal d'interrogation (3) comprenant un signal porteur et un signal à large spectre (4) superposé et pour récupérer, par un décodeur, le signe du signal codé (5) et un signal à large spectre diffusé (7) à partir du signal de réflexion (6), dans lequel l'unité de traitement des données (9) est configurée pour déterminer un décalage de phase ou un temps de transit du signal à large spectre (4) par comparaison du signal à large spectre (4) envoyé avec le signal à large spectre diffusé (7) et pour en calculer la distance entre le lecteur RFID (2) et l'étiquette RFID (1),
**caractérisé en ce que**
afin de déterminer le signal à large spectre diffusé (7) aussi précisément que possible, le lecteur RFID (2) est configuré pour multiplier le signal de réflexion (6) reçu par le signe du signal codé (5) dans la période respective et l'additionner sur une ou plusieurs périodes du signal codé (5) de telle sorte que les signaux d'interférence s'annulent.

13. Le système selon la revendication 12, **caractérisé en ce que** le système comprend en outre une unité de traitement des données (15) qui est reliée ou peut être reliée aux lecteurs RFID (1) et une base de données (16), dans lequel les positions des lecteurs RFID (1) sont enregistrées dans la base de données et l'unité de traitement des données (15) est configurée pour calculer la position des étiquettes RFID (1) à partir des positions des lecteurs RFID (2) et des distances entre les lecteurs RFID (2) et les étiquettes RFID (1).

14. Le système selon la revendication 12 ou 13, **caractérisé en ce que** plusieurs antennes sur le lecteur RFID pour l'estimation d'angle dans un ou deux plans sont prévues.
